# EUROPEAN PATENT SPECIFICATION

(11) **EP 0 315 469 B1**
(45) Date of publication and mention of the grant of the patent: **03.03.1993**
(21) Application number: 88310398.8
(22) Date of filing: 04.11.1988
(51) Int. Cl.: B23Q 1/08, B23Q 15/12

(54) **Machining apparatus and method**
Vorrichtung und Verfahren zur spanabhebenden Bearbeitung
Dispositif et procédé d'usinage

(30) Priority: 06.11.1987 JP 280516/87
(43) Date of publication of application: 10.05.1989
(73) Proprietor: SEIKO SEIKI KABUSHIKI KAISHA, Narashino-shi Chiba (JP)
(72) Inventor: Ando, Shigenori, Narashino-shi Chiba (JP); Iijima, Ryuji, Narashino-shi Chiba (JP)
(74) Representative: Miller, Joseph

(56) References cited:
- EP-A- 0 078 421
- DE-A- 2 644 380
- FR-A- 2 161 844
- PATENT ABSTRACTS OF JAPAN, vol. 7, no. 179 (M-234)[1324], 9th August 1983; & JP-A-58 82 650 (YAMAZAKI TEKKOSHO K.K.) 18-05-1983

## Description

The present invention relates to machining apparatus and methods of operating such apparatus.

In conventional machining apparatus, machining conditions are generally determined by the material of the workpiece, the tool being used, and the machining method used.

Machining to optimum efficiency is difficult because it is difficult to follow changes of load which are caused by various factors including changes of cutting resistance resulting from changes in the sharpness of a tool. Because of this problem, it is difficult to improve the machining accuracy and machining efficiency.

Some machining apparatus have overcome the above-mentioned problem. For example, one machining apparatus is capable of controlling machining by the use of changes of electric power supplied to a spindle driving motor. Another machining apparatus is capable of controlling machining by the use of changes of the bearing pressure during machining.

However, these conventional machining apparatus suffer from problems, such as changes of output from detectors due to changes in revolution of the spindle, friction torque of the bearing, temperature of the bearing, low detection sensitivity and slow response speed.

An object of the invention is to overcome such problems and thus improve machining accuracy and machining efficiency.

DE-A-2 644 380 describes a machining apparatus comprising a main rotatable spindle having a tool at one end thereof, and supported, in operation, without contact and by magnetic force from radial and axial supporting electromagnets, the energising currents to which are under the control of magnetic bearing control means responsive to outputs from position detecting means for detecting the radial and axial positions of the spindle.

According to the present invention there is provided a machining apparatus comprising a main rotatable spindle having a tool at one end thereof, and supported, in operation, without contact and by magnetic force from radial and axial supporting electromagnets, the energising currents to the electromagnets being under the control of magnetic bearing control means responsive to outputs from position detecting means for detecting the radial and axial positions of the spindle, and relative movement means to effect relative movement between the tool and a workpiece to be machined, characterised in that there are current measuring means for measuring currents to at least one of the electromagnets, and machining control means for controlling machining conditions according to the measured currents, the machining control means being arranged to control the relative movement means.

According to the machining apparatus as defined above, the machining control means control machining so that electric currents flowing in the electromagnets are maintained according to predetermined conditions in order to produce an optimum machining condition, so that machining can be carried out under optimum machining conditions, for example, cutting load, cutting speed, lifetime of tools, thus improving machining accuracy and machining efficiency.

The present invention extends to a method of operating machining apparatus comprising a rotatable spindle having a tool at one end, electromagnets for radially and axially supporting the spindle by magnetic force without contact, and relative movement means to effect relative movement between the tool and a workpiece to be machined, in which method the spindle is rotated, the radial and axial positions of the spindle are detected, and currents are supplied to the electromagnets responsive to such detection, characterised in that the supplied currents are measured and compared with reference values, and the relative movement means is controlled in accordance with the results of such comparisons.

The present invention is hereunder described with reference to the accompanying drawings, in which:-
Figure 1 is a section of the main portion of the machining apparatus according to the invention;
Figure 2 is a block diagram of the machining control means,
Figure 3 is a diagram showing cutting condition of a tool or a cutting table in a first embodiment of the apparatus;
Figure 4 schematically shows a control diagram;
Figure 5 is a flow chart of the control steps;
Figure 6 schematically shows the control diagram of a second embodiment of the present invention,
Figure 7 is a flow chart of the control steps;
Figure 8 is a diagram showing the cutting condition of a third embodiment of the present invention;
Figure 9 schematically shows the control diagram;
Figure 10 is a flow chart of the control steps;
Figure 11 schematically shows the control diagram of a fourth embodiment of the present invention;
Figure 12 is a flow chart of the control steps.

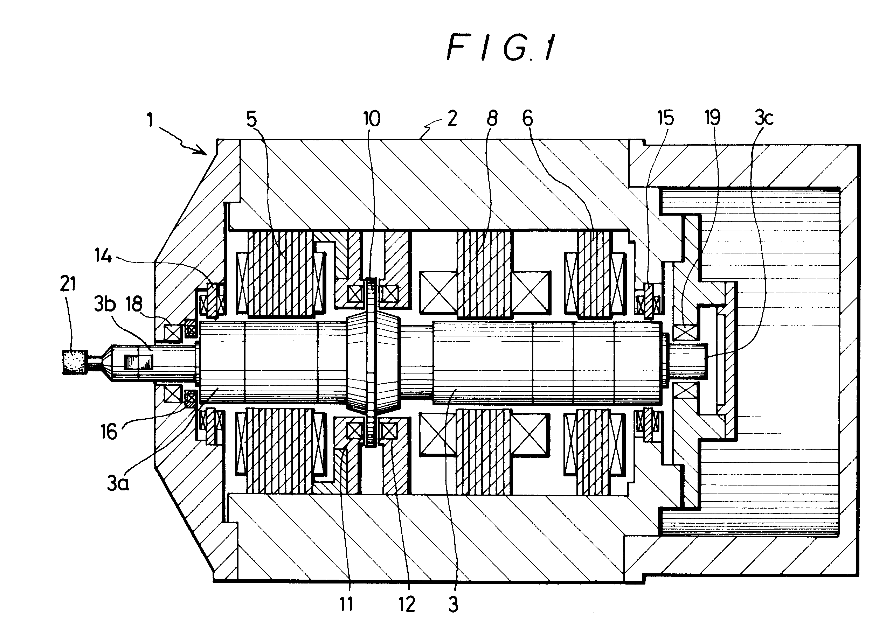

A first embodiment of machining apparatus according to the present invention (Figure 1) takes the form of a grinding apparatus 1 whose exterior body 2 is generally cylindrical. A spindle 3 is disposed axially within the body 2 and, in operation, is electromagnetically supported by radially disposed electromagnets 5 and 6 at opposite ends of the body 2, so as to float. In the central region of the spindle 3 between the electromagnets 5 and 6, an electromagnetic motor 8 encircles the spindle 3 and, in operation, rotates the spindle. Between the motor 8 and the electromagnet 5, the spindle 3 has a flange 10 on either side of which are disposed a pair of axially-facing electromagnets 11 and 12 which, in operation, restrict axial displacement of the spindle 3 within the body 2.

An electromagnetic radial position sensor 14 (position detecting means) is located in one end cap of the body 2 near the radial electromagnet 5. The position sensor 14 detects separation between the spindle 3 and the internal surface of sensor 14 which corresponds to the internal surface of the radial electromagnet 5 thereby detecting the radial position of the spindle 3 in the vicinity of the electromagnet 5. A similar position sensor 15 is located at the other end of the body for detecting the radial position of the spindle 3 in the vicinity of the electromagnet 6. An electromagnetic axial position sensor 16 is also located in the one end cap of the body 2 for detecting the axial position of the spindle 3 by reference to a step formed between the central region 3a of the spindle 3 and a smaller diameter end portion 3b.

Protective radial bearings 18 and 19 in end caps of the body 2 surround the smaller diameter portion 3b of the spindle 3 and a smaller diameter portion 3c at the other end respectively. These protective bearings 18 and 19 directly support the spindle 3 at the smaller diameter portions 3b and 3c, when the power supply to the radial electromagnets 5 and 6 is cut off and consequently they lose the magnetic force to float the spindle 3.

A cylindrical grinder 21 is mounted at the tip of the smaller diameter portion 3b of the spindle 3 so as, in operation, to be rotated by the spindle 3 to grind a workpiece (not shown).

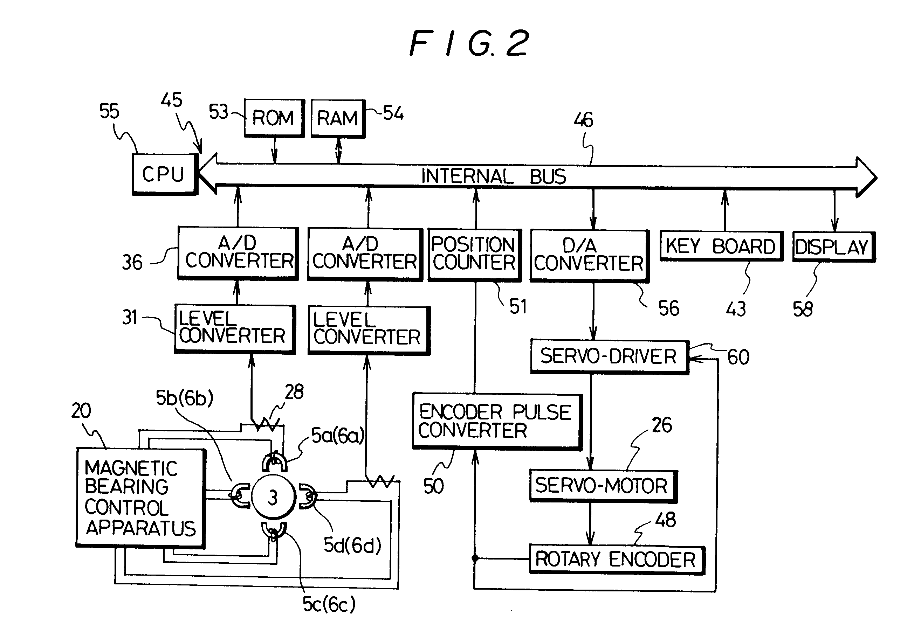

The electromagnets 5 and 6 (Figure 2) each consist of a set of four electromagnets 5a to 5d and 6a to 6d. The radial electromagnets are controlled by magnetic bearing control apparatus 20. In operation, the diametrally opposite electromagnets 5a, 5c and 6a, 6c (hereinafter referred to as tangential direction electromagnets), magnetically float the spindle 3 in the neutral position in the vertical plane therebetween, and generate a magnetic force acting against a tangential component force of a machining load acting against the grinder 21.

In operation, the diametrally opposite electromagnets 5b, 5d and 6b, 6d (hereinafter referred to as normal direction electromagnets) magnetically float the spindle in the neutral position in the horizontal plane therebetween, and generate a magnetic force acting against a normal component force (in the cutting direction) of the machining load acting against the grinder 21. The workpiece is shifted relative to the spindle 3 for cutting by the rotation of a servo-motor 26 through a ball screw (not shown).

Current flowing in the tangential direction electromagnets 5a and 6a is measured by a current transformer 28. Current flowing in the normal direction electromagnets 5d and 6d is measured by a current transformer 29. The measured currents are level converted in level converters 31 and the resultant analogue values are converted in A/D converters 36 into digital signals input into an internal bus 46 of a micro-computer 45 forming part of the machining control means.

Rotation of the servo-motor 26 is measured by a rotary encoder 48, and the position of a servo-motor-driven cutting table (not shown) is determined based on the measured rotation. Signals from the rotary encoder 48 are transmitted through an encoder pulse converter 50 and a position counter 51 to be input into the internal bus 46. The micro-computer 45 operates to store in a RAM store 54, data input from a keyboard 43 into the internal bus 46, changing and erasing data already stored there.

The micro-computer 45 includes a CPU 55 which carries out the functions of decoding, operating, and controlling according to a program stored in a ROM store 53, various data input into the internal bus 46 and stored in the ROM store 53 and the RAM store 54. Digital signals output through the internal bus 46 into a D/A converter 56 are converted into analogue or voltage signals therein. These are supplied to a servo-driver 60 which rotates the servo-motor 26 according to the voltage signal, receiving rotational data from the rotary encoder 48, thereby shifting the cutting table by a required amount. Display apparatus 58 comprising a CRT or liquid crystal display, displays information, including commands in response to digital signals input into the display apparatus 58 through the internal bus 46.

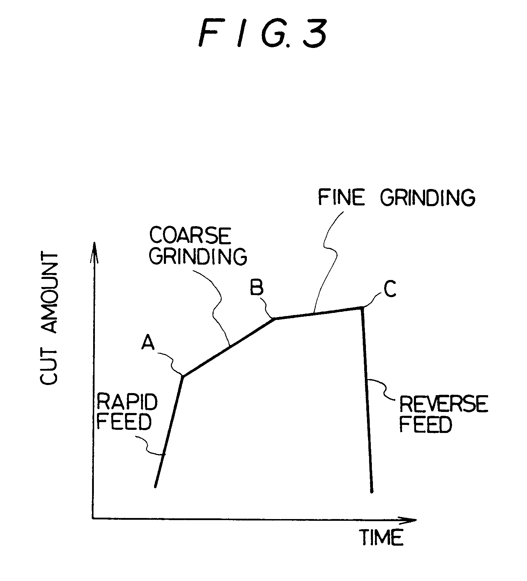

In operation, the grinding apparatus 1 has a workpiece rapidly moved by the cutting table to position A (Figure 3) adjacent the grinder 21. Then the workpiece is moved between position A and position B, over which range coarse grinding is carried out. Then the workpiece is moved between position A and position C over which range fine grinding is carried out. Finally, the workpiece is withdrawn rapidly from position C in reverse.

During the time that the workpiece is fed from position A to position B, a constant load is applied to the grinder in normal cutting direction relative to the workpiece. For this purpose, the micro-computer 45 controls the servo-motor 26 so that a constant current always flows in the normal direction electromagnets 5b, 6b and 5d, 6d. That current is sufficient for coarse grinding. During the time that the workpiece is fed from position B to position C, a constant load is applied to the grinder 21 in the normal cutting direction, and the micro-computer 45 controls the servo-motor 26 so that a constant current always flows in the normal direction electromagnets 5b, 6b and 5d, 6d.

That current is sufficient for fine grinding. It will be seen from Figure 3 that the rate of advance of the workpiece is much less during fine grinding than during coarse grinding.

When the workpiece reaches position C, the micro-computer 45 controls the servo-motor 26 so that the workpiece is withdrawn from the grinder 21 by reverse feed.

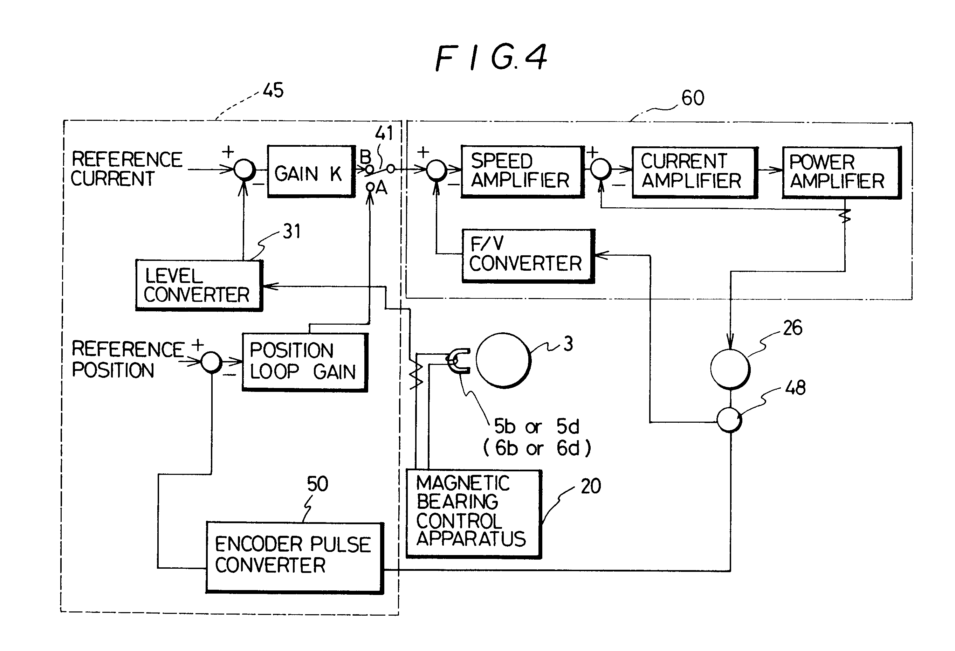

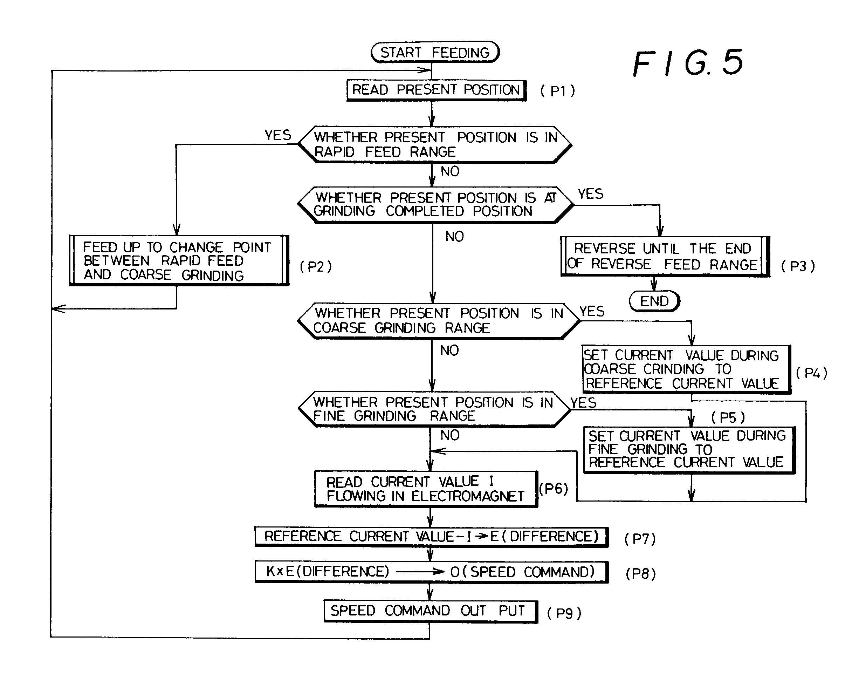

In operation, once the spindle 3 of the grinding apparatus 1 is rotating at the correct speed to rotate the grinder 21, a START FEEDING instruction (Figure 5) is given. This starts the servo-motor 26 moving the cutting table. The position of the cutting table is read (P1) by the rotary encoder 48 which passes a signal to the encoder pulse converter 50 (Figure 4). This is compared in the micro-computer 45 to a reference position, initially position A in this example, and the switch 41 operated so as to contact the A terminal thereof. To this terminal is supplied a signal from the position loop gain according to the difference between the reference position and the current position of the cutting table. This is supplied by the switch 41 to the servo-driver 60 to rotate the servo-motor 26.

The present position is repeatedly read and a determination made as to whether it is in the rapid feed range, that is that it has not yet reached the position A. If not, the operation P2 continues to feed the cutting table up to a change point between rapid feed and coarse grinding, that is position A. Thereby, the cutting table is rapidly moved to position A at which coarse grinding is to begin.

When the cutting table reaches the position A, the determination as to whether the present position is in the rapid feed range becomes negative and a determination is made as to whether the present position is at the grinding completed position, that is position C in this example. If not, a further determination is made as to whether the present position is in the coarse grinding range. If so, operation P4 occurs and a predetermined current value is set during coarse grinding as the reference current value. At the same time, the switch 41 is changed so as to contact the B terminal.

The current I flowing in the normal direction electromagnets 5b, 5d, 6b and 6d is read in operation P6 by the current transformer 29 which supplies the information in signal form to the level converter 31 whence it is taken to be compared to the reference current value. The difference E between the read current value I and the predetermined reference current value is calculated in operation P7. The difference E is then subjected to gain K in operation P8 and passed to the servo-driver 60 as a command to rotate the servo-motor 26 so as to move the cutting table at such a speed as to maintain the measured current value I at the reference current value in operation P9. It will be appreciated that the currents in the normal direction electromagnets will not be equal to the reference current value if the load on the grinder is more than or less than the desired load. In order to adjust the load, the speed at which the cutting table is moved from the position A to the position 8, that is the coarse grinding range, is increased or decreased to maintain the normal direction electromagnet currents equal to the reference value.

During this time, the present position of the cutting table continues to be read in operation P1. Determinations are made as to whether the present position is in the rapid feed range, at the grinding completed position or in the coarse grinding range. Whilst the former are negative and the latter positive, movement of the cutting table from position A to position B continues. When the position B is reached, the present position is not in the coarse grinding range and a further determination is made as to whether the present position is in the fine grinding range, that is whether it is between positions B and C in this example. If so, then in operation P5 a different predetermined current value is set during fine grinding as the reference current value. This is followed by operations P6, P7, P8 and P9 as before, but with a different reference current to be compared with. This alters the load on the grinder, but again the speed at which the cutting table is moved from position B to position C is increased or decreased to maintain the normal direction electromagnet currents equal to the different reference value during the fine grinding range.

When the signal from the rotary encoder 48 indicates that the cutting table has reached the point where grinding is completed, that is position C, the switch 41 changes over to the A terminal and the servo-driver 60 controls the servo-motor 26 to reverse feed the cutting table from the position C until the end of the reversed feed range in operation P3.

Thus, the servo-motor 26 is controlled in such a manner that each of the loads in the normal direction during coarse grinding range and during fine grinding range becomes constant at a respectively different value, and thereby highly accurate grinding work including improved cylindricality of a workpiece becomes possible.

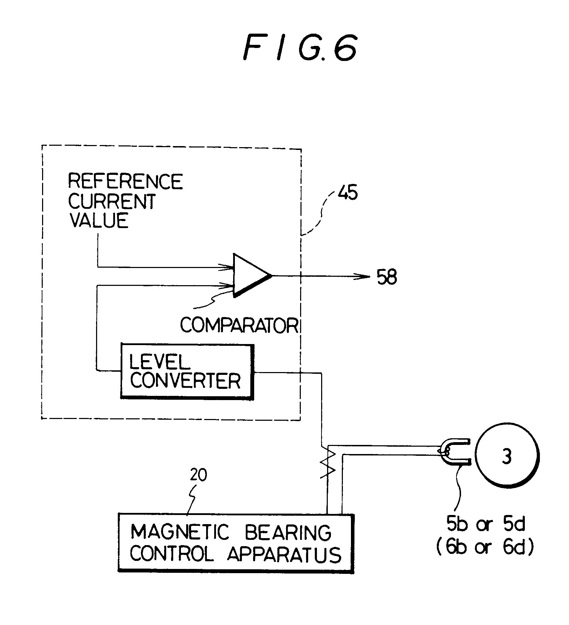

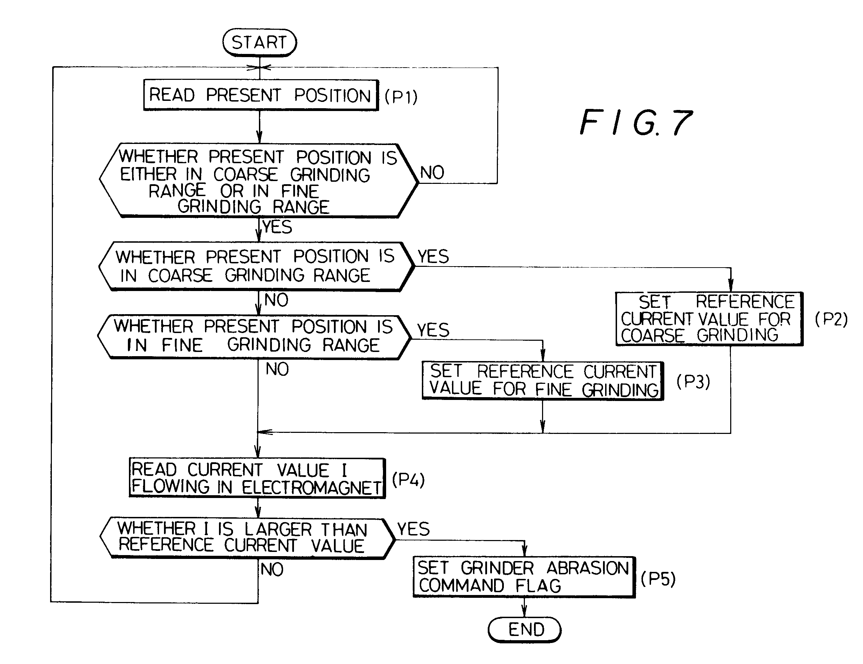

In a second embodiment of the present invention (Figures 6 and 7), the cutting table is fed at constant speeds. With the grinder 21 rotating as before, the operation is started and, in operation P1 (Figure 7), the present position of the cutting table is repeatedly read based on a signal from a rotary encoder 48.

Determinations are made as to whether the present position is either in coarse or fine grinding ranges and, if so, which. If in the coarse grinding range, a predetermined appropriate reference current value is set for comparison with the normal direction electromagnet currents in operation P2. Then when the fine grinding range is reached, a different predetermined reference current value is set for the fine grinding range in operation P3. In either case, in operation P4 the normal direction electromagnet currents are detected by the current transformer 29 (Figure 6), level converted in the level converter 31 and compared to the current reference current value in a comparator 32. Whilst the detected current is less than the reference current value, the cutting table is fed at constant speed according to whether coarse or fine grinding is called for. When it is determined that the current value I exceeds the predetermined reference current value, it is judged that the grinder 21 is abraded, and a command, which requires the correction of the grinder after the completion of one cycle of grinding work and before the start of the following grinding work, is input into the display apparatus 58 in operation P5.

In this manner, the micro-computer 45 determines abrasion of the grinder 21 and outputs a command for correction of the grinder in order to carry out grinding work with optimum cutting efficiency, whereby the grinding work is carried out with high accuracy and high efficiency.

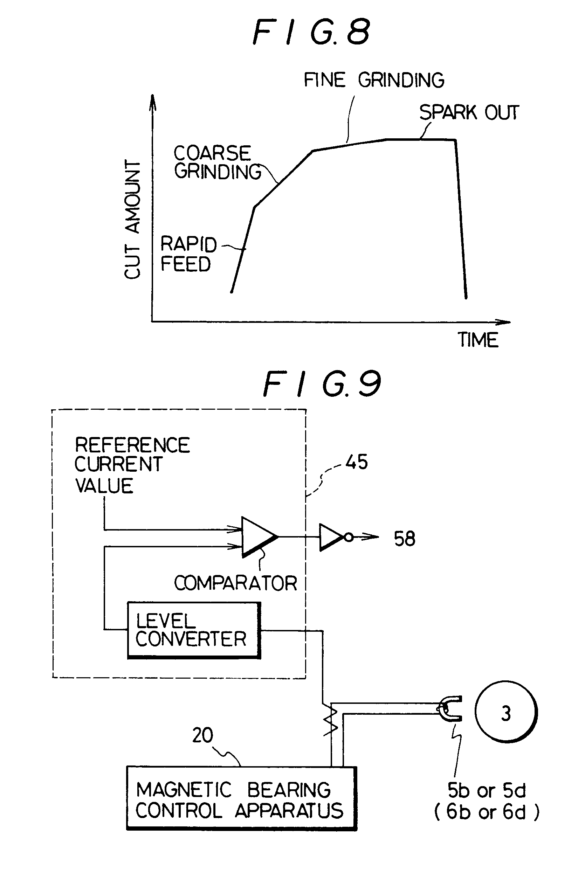

In a third embodiment of the present invention (Figures 8,9 and 10), a grinding method which includes one step of spark-out is used, in order to improve grinding accuracy. In the spark-out step, grinding is carried out after the fine grinding step whilst the workpiece is not positively fed by the servo-motor. The only relative movement of the workpiece and grinder is due to elastic restoring forces. The purpose of spark-out is to allow completion of grinding with the workpiece and tool relaxed. Conventionally, the time for spark-out is fixed by a timer to be equal for every cycle of grinding work. Because of this, an unnecessarily long time is sometimes spent for spark-out which eventually increases the otherwise shorter time for one cycle of grinding work, thereby resulting in lower efficiency.

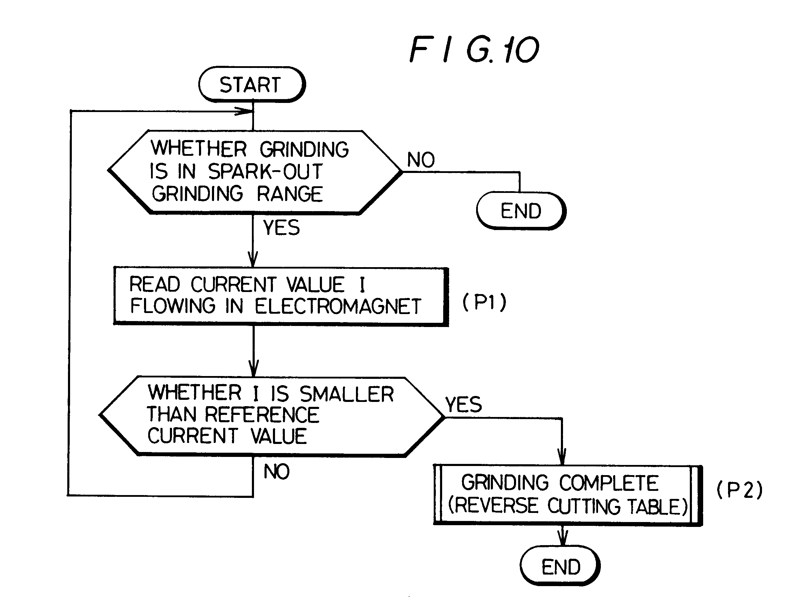

The third embodiment is used in order to solve this problem. After coarse and fine grinding a determination (Figure 10) additional to those in Figures 5 and 7 is made as to whether the cutting table position is in the spark-out grinding range. If so, the current value I flowing in normal direction electromagnets is read by the current transformer 29, is level converted in level converter 31 (Figure 9) and compared with a predetermined reference current value. When it is determined that the current value I is less than the predetermined reference current value, and therefore further spark-out grinding is not required, grinding work is completed and the cutting table is reverse fed in operation P2. It will be appreciated that the predetermined reference current value for spark-out grinding is set in the micro-computer comparator when fine grinding is complete. In this manner, the time for spark-out is made shorter than a time fixed by timer, the grinding work time is shortened, and efficiency is improved.

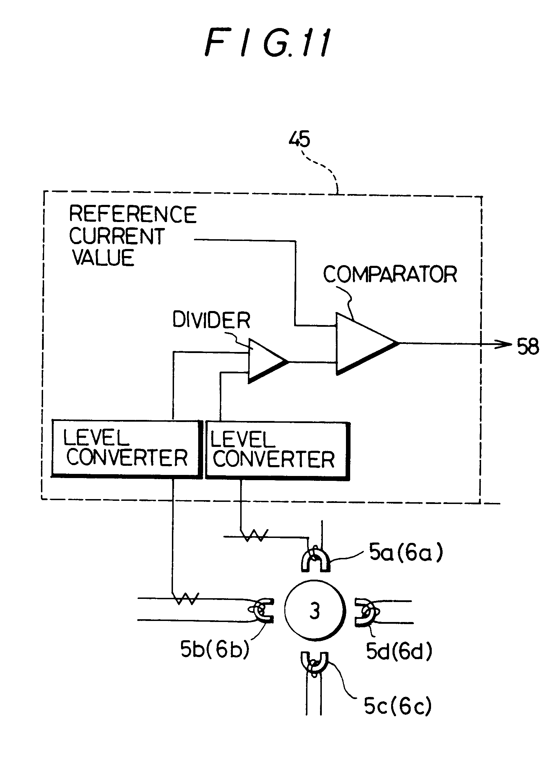

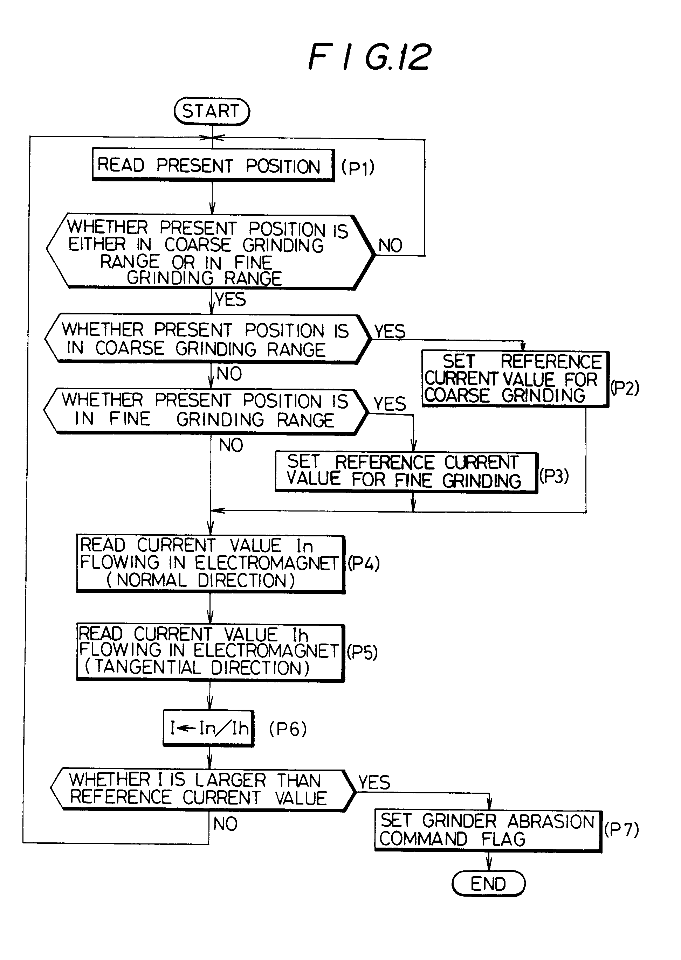

In a fourth embodiment of the present invention (Figures 11 and 12) current values are read not only from normal direction electromagnets 5b, 5d, 6b, 6d, but also from tangential direction electromagnets 5a, 5c, 6a, 6c. Abrasion of the grinder 21 is determined based on the ratio of the current value In of the normal direction, electromagnets and the current value Ih of the tangential direction electromagnets, and based on this determination a command for correction of the grinder is output. The position of the cutting table is read in operation P1 (Figure 12) according to a signal from a rotary encoder 48. When the present position of the cutting table is in the coarse or fine grinding range, a reference current ratio value for coarse grinding is set in operation P2, or a reference current ratio value for fine grinding is set in operation P3. Then, the current In flowing in the normal direction electromagnets is read and level converted in operation P4, and the current value Ih flowing in the tangential direction electromagnets is read and level converted in operation P5. The ratio I of the current value In to the current value Ih is calculated in a divider in the micro-computer 45 in operation P6.

Then the ratio I is compared in a comparator with the preset reference current ratio value and if the ratio I is larger than the reference value, it is an indication that the grinder 21 is abraded. Accordingly a command, which requires correction of the grinder to be carried out after the present cycle of grinding work and before the following cycle of grinding work, is input into the display apparatus 58 in operation P7. The above determination method uses the phenomenon that the ratio of the tangential component force and normal component force of the load acting against the spindle changes when abrasion of the grinder 21 develops.

In this manner, the micro-computer 45 determines the abrasion of the grinder 21 and outputs the command for correction of the grinder in order to carry out grinding work with an optimum cutting efficiency, whereby the grinding work is carried out with high accuracy and high efficiency.

In the above embodiments, a workpiece is moved relative to the grinder (or spindle), but the grinder could be moved relative to a workpiece instead.

Also in the above embodiments, the electromagnets are disposed in a vertically crisscross fashion, but they could be disposed in an obliquely crisscross fashion, in other words in an X fashion instead. In the latter case, current values flowing in all the electromagnets are read, and the tangential and normal components of a load acting against the spindle 3 can be calculated.

Although in the above embodiments, the machining apparatus having a main spindle supported by magnetic bearings is a grinding apparatus, it can also be used in other machining apparatus such as milling machines, drilling machines and the like.

As described in the foregoing, according to the present invention, machining control means control to maintain an optimum machining condition based on current values flowing in the electromagnets, whereby machining work is carried out under an optimum condition, and the machining accuracy and efficiency can be improved.

In particular, in the first embodiment, the servo-motor is controlled in such a manner that each of machining loads in the normal direction during coarse grinding and fine grinding becomes constant at a respectively different value. This method provides highly accurate grinding work including improved cylindricality of a workpiece.

In the second and fourth embodiments, the machining control means outputs a command for correction of the grinder on determining abrasion of the grinder, whereby a workpiece is always ground with an optimum cutting efficiency, and therefore highly accurate and highly efficient grinding work can be achieved.

Further, in the third embodiment, the time for spark-out can be made shorter than a time duration set by timer, which shortens the total grinding time and improves grinding efficiency.

It will be appreciated that in the apparatus described with reference to and illustrated in Figure 1 of the accompanying drawings, the workpiece moves towards and away from the rotating tool or grinder 21 in a direction normal to the axis so that current is supplied to the normal direction electromagnets to resist any tendency of the spindle 3 to move under the cutting load. If the workpiece is moved in some other direction relative to the tool or grinder, then currents are supplied to all the electromagnets to counteract the cutting load. If the relative movement is in the axial direction, then the currents to the axial electromagnets are controlled to resist any consequent axial movement of the spindle relative to the body 2. In all cases, the currents supplied to the elecromagnets may be used to control the relative speed of the workpiece to the tool or grinder, and thus to adjust the cutting load to the optimum for the particular operation.

It will also be appreciated that the methods described in relation to the first, second, third and fourth embodiments may be combined as desired. Thus, in addition to controlling the speed (Figure 5) in the coarse and fine grinding ranges, reversal of the cutting table may be delayed for spark-out as in Figure 10, and grinder abrasion may be indicated by commands as in Figure 7 and/or Figure 12.

## Claims

1. A machining apparatus comprising a main rotatable spindle (3) having a tool (21) at one end thereof, and supported, in operation, without contact and by magnetic force from radial and axial supporting electromagnets (5,6,11,12), the energising currents to the electromagnets being under the control of magnetic bearing control means (20) responsive to outputs from position detecting means (14,15,16) for detecting the radial and axial positions of the spindle (3), and relative movement means (26) to effect relative movement between the tool (21) and a workpiece to be machined, characterised in that there are current measuring means (28,29) for measuring currents to at least one of the electro-magnets, and machining control means (45) for controlling machining conditions according to the measured currents, the machining control means (45) being arranged to control the relative movement means (26).

2. Apparatus as claimed in claim 1, in which the machining control means (45) controls the relative movement between the tool (21) and a workpiece responsive to the measured currents, so as to maintain a preset cutting load.

3. Apparatus as claimed in claim 1 or 2, in which the machining control means (45) controls the cutting speed between the tool (21) and workpiece responsive to the measured currents.

4. Apparatus as claimed in any preceding claim, including means (26,48,50,51) to indicate the relative positions of the tool (21) and workpiece, the machining control means (45) being responsive to such indications to set reference current values against which the measured currents are compared.

5. Apparatus as claimed in claim 4, in which the machining control means (45) is responsive to an indication that the relative positions of the tool (21) and workpiece are such as to be at the end of the machining, to move the workpiece away from the tool (21).

6. Apparatus as claimed in claim 4, in which the machining control means (45) is responsive to an indication that the relative positions of the tool (21) and workpiece are such as to be, at the end of machining, to delay removal of the workpiece from the tool (21) until the measured currents are less than a preset reference amount (spark-out).

7. A method of operating machining apparatus comprising a rotatable spindle (3) having a tool (21) at one end, electromagnets (5,6,11,12) for radially and axially supporting the spindle by magnetic force without contact, and relative movement means (26) to effect relative movement between the tool (21) and a workpiece to be machined, in which method the spindle is rotated, the radial and axial positions of the spindle are detected, and currents are supplied to the electromagnets responsive to such detection, characterized in that the supplied currents are measured and compared with reference values, and the relative movement means (26) is controlled in accordance with the results of such comparisons.

## Patentansprüche

1. Bearbeitungseinrichtung umfassend eine drehbare Hauptspindel (3) mit einem Werkzeug (21) an einem ihrer Enden, welche im Betrieb ohne Kontakt und durch die magnetische Kraft von radial und axial tragenden Elektromagneten (5, 6, 11, 12) getragen ist, wobei die Erregerströme für die Elektromagneten unter der Steuerung von magnetischen Lagersteuermitteln (20) stehen, welche auf Ausgaben von Stellungserfassungsmitteln (14, 15, 16) zum Erfassen der radialen und axialen Stellungen der Spindel (3) ansprechen, sowie Relativbewegungsmittel (26) um eine relative Bewegung zwischen dem Werkzeug (21) und einem zu bearbeitenden Werkstück zu bewirken, **dadurch gekennzeichnet**, daß Strom-Meßmittel (28, 29) zum Messen der Ströme zu wenigstens einem der Elektromagneten vorgesehen sind, sowie Bearbeitungssteuermittel (45) zum Steuern der Bearbeitungsbedingungen gemäß den gemessenen Strömen, wobei die Bearbeitungssteuermittel (45) dazu eingerichtet sind, die Relativbewegungsmittel (26) zu steuern.

2. Einrichtung nach Anspruch 1, in welcher das Bearbeitungssteuermittel (45) die Relativbewegung zwischen dem Werkzeug (21) und einem Werkstück in Antwort auf die gemessenen Ströme steuert, um eine voreingestellte Schnittbelastung beizubehalten.

3. Einrichtung nach Anspruch 1 oder 2, in welcher das Bearbeitungssteuermittel (45) die Schnittgeschwindigkeit zwischen dem Werkzeug (21) und dem Werkstück in Antwort auf die gemessenen Ströme steuert.

4. Einrichtung nach einem der vorhergehenden Ansprüche, umfassend Mittel (26, 48, 50, 51) zum Anzeigen der relativen Stellungen des Werkzeugs (21) und des Werkstücks, wobei das Bearbeitungssteuermittel (45) auf derartige Anzeigen anspricht, um Referenzstromwerte zu setzen, mit welchen die gemessenen Ströme verglichen werden.

5. Einrichtung nach Anspruch 4, in welcher das Bearbeitungssteuermittel (45) auf eine Anzeige, daß die relativen Stellungen des Werkzeugs (21) und des Werkstücks derart sind, daß das Ende der Bearbeitung erreicht ist, anspricht, um das Werkstück von dem Werkzeug (21) wegzubewegen.

6. Einrichtung nach Anspruch 4, in welcher das Bearbeitungssteuermittel (45) auf eine Anzeige, daß die relativen Stellungen des Werkzeugs (21) und des Werkstücks derart sind, daß das Ende der Bearbeitung erreicht ist, anspricht, um das Wegbewegen des Werkstücks von dem Werkzeug (21) zu verzögern, bis die gemessenen Ströme niederer sind als der voreingestellte Bezugswert (Ausfunken).

7. Verfahren zum Betätigen einer Bearbeitungseinrichtung umfassend eine drehbare Spindel (3) mit einem Werkzeug (21) an einem Ende, Elektromagneten (5, 6, 11, 12) zum radialen und axialen Tragen der Spindel durch magnetische Kraft ohne Kontakt, und Relativbewegungsmittel (26) um eine relative Bewegung zwischen dem Werkzeug (21) und einem zu bearbeitenden Werkstück zu bewirken, in welchem Verfahren die Spindel rotiert wird, die radialen und axialen Stellungen der Spindel erfaßt werden und in Antwort auf eine derartige Erfassung den Elektromagneten Ströme zugeführt werden, **dadurch gekennzeichnet**, daß die zugeführten Ströme gemessen und mit Referenzwerten verglichen werden, und die Relativbewegungsmittel (26) gemäß den Ergebnissen derartiger Vergleiche gesteuert werden.

## Revendications

1. Un appareil d'usinage comprenant une broche tournante principale (3) portant un outil (21) à une extrémité, et qui est supportée, pendant le fonctionnement, sans contact et par une force magnétique qui est exercée par des électro-aimants de support radiaux et axiaux (5, 6, 11, 12), les courants d'excitation des électro-aimants étant sous la commande de moyens de commande de paliers magnétiques (20) qui réagissent à des signaux de sortie de moyens de détection de position (14, 15, 16) qui sont destinés à détecter les positions radiale et axiale de la broche (3), et de moyens de déplacement relatif (26) qui sont destinés à produire un déplacement relatif entre l'outil (21) et une pièce à usiner, caractérisé en ce qu'il comporte des moyens de mesure de courant (28, 29) qui sont destinés à mesurer des courants appliqués à l'un au moins des électro-aimants, et des moyens de commande d'usinage (45) qui sont destinés à commander des conditions d'usinage conformément aux courants mesurés, les moyens de commande d'usinage (45) étant conçus de façon à commander les moyens de déplacement relatif (26).

2. Appareil selon la revendication 1, dans lequel les moyens de commande d'usinage (45) commandent le mouvement relatif entre l'outil (21) et une pièce à usiner sous la dépendance des courants mesurés, de façon à maintenir une charge de coupe fixée à l'avance.

3. Appareil selon la revendication 1 ou 2, dans lequel les moyens de commande d'usinage (45) commandent la vitesse de coupe entre l'outil (21) et la pièce à usiner sous la dépendance des courants mesurés.

4. Appareil selon l'une quelconque des revendications précédentes, comprenant des moyens (26, 48, 50, 51) qui sont destinés à indiquer les positions relatives de l'outil (21) et de la pièce à usiner, les moyens de commande d'usinage (45) réagissant à de telles indications en fixant des valeurs de courant de référence avec lesquelles les courants mesurés sont comparés.

5. Appareil selon la revendication 4, dans lequel les moyens de commande d'usinage (45) réagissent à une indication du fait que les positions relatives de l'outil (21) et de la pièce à usiner sont telles que l'usinage est terminé, en écartant de l'outil (21) la pièce à usiner.

6. Appareil selon la revendication 4, dans lequel les moyens de commande d'usinage (45) réagissent à une indication du fait que les positions relatives de l'outil (21) et de la pièce à usiner sont telles que l'usinage est terminé, en retardant le retrait de la pièce à usiner, par rapport à l'outil (21), jusqu'à ce que les courants mesurés soient inférieurs à une valeur de référence fixée à l'avance (arrêt d'étincelage).

7. Un procédé pour faire fonctionner un appareil d'usinage comprenant une broche tournante (3) ayant un outil (21) à une extrémité, des électro-aimants (5, 6, 11, 12) destinés à supporter la broche de façon radiale et de façon axiale au moyen d'une force magnétique, sans contact, et des moyens de déplacement relatif (26) destinés à effectuer un déplacement relatif entre l'outil (21) et une pièce à usiner, dans lequel on fait tourner la broche, on détecte les positions radiale et axiale de la broche, et on applique des courants aux électro-aimants sous la dépendance de cette détection, caractérisé en ce qu'on mesure les courants appliqués et on les compare avec des valeurs de référence, et en ce qu'on commande les moyens de déplacement relatif (26) conformément aux résultats de ces comparaisons.
